Europäisches Patentamt

European Patent Office

Office européen des brevets

(11) Publication number: **0 451 866 A1**

# EUROPEAN PATENT APPLICATION

(21) Application number: 91105880.8

(22) Date of filing: 12.04.91

(51) Int. Cl.5: **C03C 1/02**, C03C 3/32, C01B 9/08, C03C 13/04

(30) Priority: 13.04.90 IT 6727690

(43) Date of publication of application:
**16.10.91 Bulletin 91/42**

(84) Designated Contracting States:
**DE FR GB IT NL SE**

(71) Applicant: PIRELLI CAVI S.p.A.
Piazzale Cadorna, 5
I-20123 Milan(IT)

Applicant: SIP SOCIETA ITALIANA PER
l'ESERCIZIO DELLE TELECOMUNICAZIONI
P.A.
Via San Dalmazzo, 15
I-10122 Torino(IT)

Applicant: SIRTI S.p.A.
Via G.B. Pirelli, 20
Milano(IT)

(72) Inventor: Cocito, Giuseppe
Via M. d'Azeglio, 15
S. Giusto Can.se (Torino)(IT)
Inventor: Ferraris, Monica
Strada Bellavista, 16/5, Rivodora
Fraz. di Baldisser Torinese (Torino)(IT)
Inventor: Grego, Giorgio
Via Amati, 130/3
Venaria (Torino)(IT)

(74) Representative: Riederer Freiherr von Paar zu
Schönau, Anton et al
Van der Werth, Lederer & Riederer Freyung
615 Postfach 2664
W-8300 Landshut(DE)

(54) Method of purifying starting materials for fluoride glass fabrication.

(57) A method of purifying starting materials for the fabrication of fluoride glasses, wherein by reaction with a fluorinating reactant the starting materials are purified by converting the impurities they contain into fluorides and compounds which are easy to eliminate.

One of the starting materials under powdered form or a mixture of a plurality of starting materials still under powdered form are placed in presence of the said gaseous or liquid fluorinating reactant under static or quasi-static conditions.

Description

The present invention relates to the glass fabrication processes for optical fibres to be used in the telecommunications domain and more particularly it concerns a method of purifying starting materials for fluoride glass fabrication.

It is known that one of the methods generally used for the fabrication of fluoride glasses, and more particularly of fluorozirconate glasses, consists of melting a mixture of suitable starting materials, generally available as crystalline powders, as far as possible impurity free. The melting is carried out in a reactor in absence of oxygen and steam, so as to avoid the generation of oxides, oxyfluorides and hydrated compounds inside the glass, which are detrimental to the optical qualtities and mechanical properties of the material, especially if it is to be drawn for the fabrication of ultra-low attenuation optical fibres operating in the mid-infrared region. Moreover, the atmosphere present in the reactor during the melting of the starting materials is generally composed of gaseous reactants, such as $NF_3$, $CCl_4$, $Cl_2$, different types of gases containing fluorides (e.g. Freon), etc., which react with hydrated compounds and oxides present in the melted mixture generating gaseous halogenated compounds (e.g. HCl), which are easy to eliminate. Gaseous materials helping to oxidize reduced species present in the glass, which are as source of attenuation in light radiation transmission, can also be used.

The melting process in presence of gaseous reactive atmosphere is performed by causing the gas to flow over the surface of the melted mixture or causing it to bubble through the mass of the mixture itself to increase its contact surface, and hence its reactivity. However, in the first case the reaction of fluorinating the oxide compounds takes place only in the superficial layers, owing to the difficulty the gas encounters to penetrate into the melted mass. In the second case, the reaction occurs only where the gas bubbles at the outputs of the various conduits. Moreover, this method proves rather expensive owing to the reactant amount necessary to maintain the required flow on the surface or through the melted mass.

Glass quality can be further enhanced, as described in the book entitled "Halide Glasses for Infrared Fiberoptics", issued by R.M.Almeida (NATO ASI SERIES, Series E n. 123), pages 47-53, by adding to the powder mixture a small quantity of ammonium bifluoride ($NH_4F$ HF) at the beginning of the preparation process. It reacts with the oxides present and generates fluorides, useful for glass preparation, and water.

Yet, besides the water obtained as a reaction product, an extra amount of water is directly added to the mixture with ammonium bifluoride, since it is a hygroscopic compound. Hence, to reduce optical losses both water and ammonium bifluoride are afterwards to be eliminated. Said polluting materials are not easy to eliminate completely. Said drawbacks are overcome by the method of purifying starting materials for fluoride glass fabrication, which allows operating in highly-concentrated reactive atmosphere for fluorinating oxide and hydroxide compounds contained in the materials and to enhancing reactivity at relatively low temperatures. Besides it allows separate purification of different starting materials under the most favourable conditions for each of them.

It is a particular object of the present invention a method of purifying starting materials for fluoride glass fabrication, wherein by the reaction with a fluorinating reactant said starting materials are purified by converting the impurities they contain into fluorides and compounds easy to eliminate, characterized in that one of the starting materials under powdered form or a mixture of a plurality of starting materials still under powdered form are placed in an atmosphere of the said fluorinating reactant under static conditions, the reactant being kept at the gaseous state and at a temperature ranging between 300 and 400° C, then polluting reaction products are exhausted.

The foregoing and other characteristics of the present invention will be made clearer by the following description of a preferred embodiment thereof, given by way of a non limiting example.

Starting materials, available as crystalline powders, are placed either individually or after mixing in a protected and non-reactive environment. Namely, a vitreous carbon crucible placed inside a silica and polytetrafluoroethylene (Teflon) reactor can be used, in absence of any metallic part, susceptible of being attacked by the gas used.

This gas, e.g. nitrogen trifluoride, $NF_3$, is let into the reactor, previously washed with $N_2$, by sending it directly on the powders by vitreous carbon conduits. Reactivity between gas and powders is considerably higher than that between gas and melted glass, consequently purification efficiency is increased. Besides, the gas is let into the reactor until a pressure slightly higher than the atmospheric pressure is obtained and therein it is left in under static, or quasi-static conditions, for the time necessary to obtain the complete dehydration of hydrated impurities and the fluorination of possible oxides present between the starting fluoride materials. For quasi-static conditions a state is meant where the gas is frequently replaced to enhance the reaction efficiency, the number of times the substitution operations being to be carried out over the purification process, as the time interval between the operations, in a manner reproducable by the person skilled in the art depending on many factors: temperature, pressure, volume, reactivity etc.

The quantity of $NF_3$ used and the time of permanence of the same in contact with the powders vary according to the purity of the starting materials and of the surface exposed to the gas. The time is generally of a few hours for some hundred grams of material. The operating temperature is comprised in the range 300 to 400°C, also for compounds of difficult fluorination, like oxide impurities contained in $LaF_3$, NaF and $BaF_2$.

The method can also be used in the purification of the individual starting materials. In this case the advantage is that of operating at the most appropriate temperature to the individual material, without any risk of inducing the formation of oxide compounds in the other materials.

After dehydration and fluorination operated by $NF_3$, one goes on as usual with melting the fluoride powder mixture to obtain the glass.

A further method improvement, allowing maximising interaction between $NF_3$ and the powders of starting materials, consists of rendering gas $NF_3$ liquid, and mixing it with the powders themselves so as to obtain a suspension. That can be obtained by letting gaseous $NF_3$ into the reactor, kept at a temperature lower than $NF_3$ liquefaction temperature, e.g. at liquid nitrogen temperature (-273°C).

Afterwards the reactor, which can be possibly sealed up, is raised to a temperature ranging between 300 and 400°C, obtaining an overpressure capable of facilitating the reactions.

It is then opened to exhaust fluorination products to be eliminated before powder mixture melting. It is also possible to increase the mixing degree between the crystalline powders and the chemical reactant of between powders and gaseous reactant during the purification, in order to increase the reactivity, by immersion of the crucible and the powders into a sufficiently high intensity ultrasonic field.

It is clear that what described has been given only by way of a non limiting example. Variations and modifications are possible without going out of the scope of the claims.

## Claims

1. Method of purifying starting materials for fluoride glass fabrication, wherein by the reaction with a fluorinating reactant said starting materials are purified by converting the impurities they contain into fluorides and compounds easy to eliminate, characterized in that one of the starting materials under powdered form or a mixture of a plurality of starting materials still under powdered form are placed in an atmosphere of the said fluorinating reactant under static conditions, the reactant being kept at the gaseous state and at a temperature ranging between 300 and 400°C, then polluting reaction products are exhausted.

2. Method of purifying starting materials for fluoride glass fabrication as in claim 1, characterized in that said fluorinating reactant is put to liquefaction temperature and is mixed with one of the starting materials under powdered form or with a mixture of more starting materials still under powdered form so as to obtain a suspension, then it is put in a closed reactor whose temperature is raised to a value comprised in the range 300 to 400°C and afterwards polluting reaction products are ejected from the reactor.

3. Method of purifying starting materials for fluoride glass fabrication as in claim 1, characterized in that said fluorinating reactant is frequently replaced to enhance reaction efficiency.

4. Method of purifying starting materials for fluoride glass fabrication as in claims 1 or 2, characterized in that during purification the fluorinating reactant and the starting materials are immersed in an ultrasonic field of sufficiently high intensity.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF MATERIALS RESEARCH vol. 3, no. 4, August 1988, pages 755 - 760; M.M.BROER ET AL.: "REACTION OF NF3 AND SF6 WITH SOME OXIDES CONNECTED WITH HEAVY-METAL FLUORIDE GLASS PROCESSING" * pages 755 - 756, left-hand column, paragraph 1 * * page 760 * | 1,3 | C 03 C 1/02<br>C 03 C 3/32<br>C 01 B 9/08<br>C 03 C 13/04 |
| A | CHEMICAL ABSTRACTS, vol. 110, no. 4, January 1989 Columbus, Ohio, USA page 272; ref. no. 28129N & JP-A-63185830 (SUMITOMO ELECTR.IND.) 01-08-88 * abstract * | 1,3 | |
| A | CHEMICAL ABSTRACTS, vol. 109, no. 24, December 1988 Columbus, Ohio, USA page 256; ref. no. 214992T & JP-A-63156030 (NIPPON T & T PUBLIC) 29-06-88 * abstract * | 1 | |

| TECHNICAL FIELDS SEARCHED (Int. Cl.5) |
|---|
| C 03 C<br>C 01 B<br>C 01 G |

The present search report has been drawn up for all claims

| Place of search | Date of completion of search | Examiner |
|---|---|---|
| The Hague | 12 July 91 | VAN BOMMEL L. |